Europäisches Patentamt

(19) European Patent Office

Office européen des brevets

(11) Publication number: **0 029 622**
**B1**

(12) **EUROPEAN PATENT SPECIFICATION**

(45) Date of publication of patent specification: 25.07.84

(21) Application number: 80200993.6

(22) Date of filing: 20.10.80

(51) Int. Cl.³: **C 08 F 279/02,**
**C 08 G 81/02,**
**C 08 C 19/44, C 10 M 1/08,**
**C 10 L 1/00**

(54) Modified hydrogenated star-shaped polymer, its preparation and a lubricating oil composition containing the polymer.

(30) Priority: 16.11.79 GB 7939785

(43) Date of publication of application:
03.06.81 Bulletin 81/22

(45) Publication of the grant of the patent:
25.07.84 Bulletin 84/30

(84) Designated Contracting States:
BE DE FR GB NL

(56) References cited:
FR - A - 2 061 452
FR - A - 2 293 485
FR - A - 2 398 795
GB - A - 2 007 686
US - A - 4 077 893
US - A - 4 116 917

The file contains technical information
submitted after the application was filed and not
included in this specification

(73) Proprietor: SHELL INTERNATIONALE RESEARCH
MAATSCHAPPIJ B.V.
Carel van Bylandtlaan 30
NL-2596 HR Den Haag (NL)

(72) Inventor: Eckert, Rudolf Josef Albrecht
Badhuisweg 3
NL-1031 CM Amsterdam (NL)

(74) Representative: Puister, Antonius Tonnis, Mr. et al,
P.O. Box 302
NL-2501 CH The Hague (NL)

Courier Press, Leamington Spa, England.

# Description

The invention relates to a modified hydrogenated star-shaped polymer, its preparation and a lubricating oil composition containing the polymer.

From U.S. patent specification 4,077,893 hydrogenated star-shaped polymers are known which have been modified resulting in products which possess both dispersant and viscosity index-improving properties when used as additives in lubricating oils. These products are prepared by reacting in a first step a selectively hydrogenated star-shaped polymer comprising a nucleus and outwardly extending arms of polymers or copolymers of dienes and monoalkenyl arenes with an alpha, beta-unsaturated carboxylic acid or derivative, and then reacting in a second step the resulting intermediate with an alkane polyol, e.g. pentaerythritol.

Modified hydrogenated star-shaped polymers have now been found, which are very different from those described in U.S. 4,077,893.

These polymers have been prepared by grafting hydrogenated star-shaped polymers with certain organic compounds.

These polymers possess a good dispersant and V.I. improver performance. Moreover, they can be prepared in a single step.

Grafting will mean a reaction of the star-shaped polymer with polymerizable polar monomers catalyzed by a free radical polymerization initiator, such as tertiary butyl hydroperoxide and t-butylbenzoate.

The star-shaped polymer to be grafted comprises polymeric arms linked to a nucleus.

The nucleus is suitably formed by polyalkenyl coupling agents. Such agents are known from U.S. 4,077,893 and U.S. 4,116,917. They may be aliphatic, aromatic or heterocyclic.

Said polymeric arms are selected from the group consisting of:

(i) hydrogenated homopolymers and hydrogenated copolymers of conjugated dienes;
(ii) hydrogenated copolymers of conjugated dienes and monoalkenyl arenes; and
(iii) mixtures thereof,

and wherein at least about 80% of the aliphatic unsaturation of the arms of the star-shaped polymer has been reduced by hydrogenation while less than 20% of the aromatic unsaturation has been reduced.

Accordingly, the present invention relates to a modified hydrogenated star-shaped polymer comprising a nucleus and polymeric arms linked to said nucleus wherein said arms are selected from the group consisting of:

(i) hydrogenated homopolymers and hydrogenated copolymers of conjugated dienes;
(ii) hydrogenated copolymers of conjugated dienes and monoalkenyl arenes; and
(iii) mixtures thereof,

and wherein at least about 80% of the aliphatic unsaturation of the arms of the star-shaped polymer has been reduced by hydrogenation while less than 20% of the aromatic unsaturation has been reduced, characterized in that the star-shaped polymer has been grafted with 2-vinylpyridine or 4-vinylpyridine.

From French patent specification 2,293,485 it is known to graft hydrogenated linear (co)-polymers of conjugated dienes and optionally styrene with certain organic compounds, such as N-vinylpyridine, in order to obtain viscosity index improvers having dispersant properties.

Contrary to expectation from this prior art grafting with 2-vinylpyridine does not improve the viscosity index of the linear polymer but does improve that of the corresponding star-shaped polymer.

The nucleus is preferably a (poly-vinyl-aromatic) nucleus. The nucleus consisting of poly-(divinylbenzene) is preferred. A nucleus comprising a poly(divinylbenzene) monoalkenyl aromatic compound is most preferred. The modified hydrogenated star-shaped polymer comprises preferably 5 to 10 polymeric arms. The number average molecular weight of each of the polymeric arms is from 5,000 to 150,000. The number average molecular weight of the hydrogenated star-shaped polymer is preferably from 25,000 to 1,500,000. Hydrogenated star-shaped polymers wherein each polymeric arm is a hydrogenated polyisoprene homopolymer are preferred. The invention also relates to a process for preparing a modified hydrogenated star-shaped polymer.

The grafting process for preparing a modified hydrogenated star-shaped polymer as hereinbefore described is preferably carried out at a temperature of from 70 to 180°C and at a pressure of from 1 to 50 bar and in an inert atmosphere, such as nitrogen. Suitably, the grafting reaction is carried out in solvents which have a very low reactivity towards free radicals, e.g. dichlorobenzene, benzene and cyclohexane. Cyclohexane is preferably used.

The polymers of this invention are preferably used in lubricating oil compositions. A preferred embodiment of the invention provides a lubricating oil composition wherein the amount of the hydrogenated star-shaped polymer is from 0.15 to 50% w, e.g. 0.5 to 20% w, based on weight of the composition. The polymers are, because of e.g. their excellent dispersancy performance, also suitably used in liquid hydrocarbon fuels, e.g. motor fuels. In this case generally lower levels of the present polymer than the above range will be used. Preferably, the fuel comprises 0.001 to 0.1% w of the polymer. The invention will be further described by reference to the following Examples.

## Example I

This example describes the preparation of an oil concentrate comprising 10% w of the polymer. A hydrogenated divinylbenzene coupled polyisoprene star-shaped polymer with a number average molecular weight of 35,000, wherein 99.4% w of the aliphatic unsaturation and none of the aromatic has been reduced which was prepared according to the process as described in U.S. 4,077,893, was grafted with 2-vinylpyridine. A 5 l stainless steel autoclave was charged with a solution consisting of 262 g polymer, 26 g 2-vinylpyridine and 2,300 g cyclohexane. After replacing the air by nitrogen $(O_2 \leqslant 30$ ppm) and heating to 140°C a solution of 3.1 g of radical initiator t-butylbenzoate in 15 ml of cyclohexane was added applying $N_2$-pressure. Heating was continued for 6 hours. 2358 g of H.V.I. (High Viscosity Index) oil were added and the cyclohexane was distilled off in vacuo.

Results:

base blend
base blend+grafted polymer
base blend+non-grafted polymer

## Claims

1. A modified hydrogenated star-shaped polymer comprising a nucleus and polymeric arms linked to said nucleus, wherein said arms are selected from the group consisting of:

(i) hydrogenated homopolymers and hydrogenated copolymers of conjugated dienes;
(ii) hydrogenated copolymers of conjugated dienes and monoalkenyl arenes; and
(iii) mixtures thereof,

and wherein at least about 80% of the aliphatic unsaturation of the arms of the star-shaped polymer has been reduced by hydrogenation while less than 20% of the aromatic unsaturation has been reduced, characterized in that the star-shaped polymer has been grafted with 2-vinylpyridine or 4-vinylpyridine.

2. A process for preparing a modified hydrogenated star-shaped polymer as claimed in claim 1, comprising grafting the unmodified hydrogenated star-shaped polymer with 2-vinylpyridine or 4-vinylpyridine.

3. A lubricating oil composition comprising a polymer as claimed in claim 1.

4. An oil concentrate comprising 0.15—50% w of a polymer as claimed in claim 3.

5. A liquid hydrocarbon fuel comprising a polymer as claimed in claim 1.

## Revendications

1. Polymère étoilé hydrogéné modifié com-

## Example II

In order to compare the dispersant activity of the grafted with that of the ungrafted or unreacted polymer a peptization test was carried out using one oil concentrate.

Results

10 ppm of the grafted polymer were sufficient to give a dispersant effect whereas 350 ppm of the unreacted polymer were still not enough to provide a satisfactory result.

## Example III

The viscometric properties of divinylbenzene coupled polyisoprene star-shaped polymer with a number average molecular weight of 35,000 as mentioned in Example I grafted with 2-vinylpyridine as described in Example I, were determined in oil blends containing 1.5% w of polymer, 10.1% w of a commercial H(eavy)D(uty)package, and 0.3% w of a pour point depressant in the oil of Example I.

| $V_k$ 100°C $[mm^2/s]$ | $V_k$ 40°C $[mm^2/s]$ | $VI_E$ |
|---|---|---|
| 5.98 | 34.25 | 120 |
| 16.25 | 104.5 | 168 |
| 15.94 | 103.1 | 166 |

prenant un noyau et des branches polymériques liées audit noyau, où lesdites branches sont choisies dans le groupe constitué par:

(i) les homopolymères hydrogénés et copolymères hydrogénés de diènes conjugués;
(ii) les copolymères hydrogénés de diènes conjugués et de mono-alcényl-arènes; et
(iii) leurs mélanges,

et où au moins environ 80% de l'insaturation aliphatique des branches du polymère étoilé a été réduite par hydrogénation tandis que moins de 20% de l'insaturation aromatique a été réduite, caractérisé en ce que le polymère étoilé a été greffé avec de la 2-vinylpyridine ou de la 4-vinylpyridine.

2. Procédé de préparation d'un polymère étoilé hydrogéné modifié selon la revendication 1, dans lequel on greffe le polymère étoilé hydrogéné non modifié avec de la 2-vinylpyridine ou de la 4-vinylpyridine.

3. Composition d'huile lubrifiante comprenant un polymère selon la revendication 1.

4. Concentré d'huile lubrifiante comprenant de 0,15 à 50% en poids d'un polymère selon la revendication 3.

5. Combustible hydrocarboné liquide comprenant un polymère selon la revendication 1.

## Patentansprüche

1. Ein modifiziertes hydriertes sternförmiges Polymer, enthaltend einen Kern und mit diesem Kern verbundene polymere Arme, in welchem besagte Arme aus der Gruppe ausgewählt sind, bestehend aus:

(i) hydrierten Homopolymeren und hydrierten Copolymeren von konjugierten Dienen,
(ii) hydrierten Copolymeren von konjugierten Dienen und Monoalkenylarenen; und
(iii) Mischungen derselben

und in welchem mindestens etwa 80% der aliphatischen Ungesättigtheit der Arme des sternförmigen Polymeren durch Hydrierung reduziert worden ist, während weniger als 20% der aromatischen Ungesättigkeit reduziert worden ist, dadurch gekennzeichnet, daß das sternförmige Polymere mit 2-Vinylpyridin oder 4-Vinylpyridin gepfropft worden ist.

2. Ein Verfahren zer Herstellung eines modifizierten hydrierten sternförmigen Polymeren wie in Anspruch 1 beansprucht, umfassend das Pfropfen des unmodifizierten hydrierren sternförmigen Polymeren mit 2-Vinylpyridin oder 4-Vinylpyridin.

3. Eine Schmierölzusammensetzung, enthaltend ein Polymer wie in Anspruch 1 beansprucht.

4. Ein Ölkonzentrat, enthaltend 0,15—50 Gewichtsprozent eines Polymeren wie in Anspruch 3 beansprucht.

5. Ein flüssiger Kohlenwasserstoffbrennstoff, enthaltend ein Polymer wie in Anspruch 1 beansprucht.